# EUROPEAN PATENT SPECIFICATION

(11) **EP 1 034 605 B1**
(45) Date of publication and mention of the grant of the patent: **09.07.2003**
(21) Application number: 98964465.3
(22) Date of filing: 30.11.1998
(51) Int. Cl.: H02K 3/40

(54) **AN INSULATED CONDUCTOR**
ISOLIERTER LEITER
CONDUCTEUR ISOLE

(30) Priority: 28.11.1997 GB 9725330
(43) Date of publication of application: 13.09.2000
(73) Proprietor: ABB AB, 721 83 Västeras (SE)
(72) Inventor: CARSTENSEN, Peter, S-141 42 Huddinge (SE); KYLANDER, Gunnar, S-723 43 Västeras (SE)
(74) Representative: Hanson, William Bennett
(86) International application number: EP9807730
(87) International publication number: WO99029021

(56) References cited:
- WO-A-97/45929
- LU-A- 67 199
- US-A- 5 807 447

## Description

The present invention relates in a first aspect to an insulated conductor for high-voltage windings in electric machines, for example rotating machines. A second aspect of the invention relates to a method of connecting the insulated conductor to an equalising potential and a third aspect of the invention relates to an electric machine, for example a large generator in a power station, comprising the insulated conductor.

The invention is applicable in rotating electric machines such as synchronous machines. The invention is also applicable in other electric machines such as dual-fed machines, and in synchronous static current cascades, outer pole machines and synchronous flow machines, provided their windings consist of insulated electric conductors of the type claimed in the claims, and preferably at high voltages. "High voltages" here refers to electric voltages exceeding 10 kV, in particular in excess of 36 kV, and preferably more than 72.5 kV up to very high voltages such as 400 kV to 800 kV or higher.

In large generators in use today, each coil is insulated from the slot with an insulation intended to withstand the rated voltage of the machine to earth. Various plastic, varnish and glass fibre materials may be used as the coil insulation material. Usually, mica tape comprising a mixture of mica and hard plastic is used, as this provides resistance to partial discharges, which can rapidly break down the insulation. The insulation is applied to the coil by winding the mica tape around the coil in several layers. The insulation is impregnated and then the coil side is painted with a graphite-based paint to improve the contact with the surrounding stator which is connected to earth.

Outside the stacked stator laminations, the winding ends are usually provided with E-field control means, namely so-called corona protection varnish intended to convert a radial field into an axial field, which means that the insulation on the winding ends is at a high potential relative to earth. Consequently, coronae can occur in the winding-end region, which may be destructive. Thus, the so-called field-controlling points at the winding ends of a rotating machine are problematic.

It is generally known that in connecting a synchronous generator, for example, to a power network, a step-up transformer must be used since the voltage of the power network usually lies at a higher level than the rated voltage of the generator. The transformer constitutes an extra cost and also lowers the total efficiency of the system. If it were possible to manufacture machines for considerably higher voltages, the step-up transformer could be omitted.

Various proposals have therefore been made for increasing the maximum voltage of practical generators currently around 25-30 kV in the case of synchronous machines. For example, it has been proposed to cool the stator windings using oil and to use a super-conducting winding. Neither of these proposals has been successfully implemented to the knowledge of the inventors.

A known method of making a conductor for a power transmission line involves extruding around strands of copper the following layers in radially outward order: a layer of semi-conducting material, for example polymer mixed with carbon black, a layer of insulating material and a second layer of semiconducting material. The conductor is then entirely sheathed in copper, for example by wrapping copper tape around the second semi-conducting layer and a final layer of insulating material is extruded over the copper sheath. The presence of the conducting copper sheath renders such cables particularly unsuitable for use in rotating machine windings, where coils cross at the ends of the machine and electrical contact between the conducting parts of different coils must be avoided.

A conductor according to the prior art is for instance disclosed in document LU-A-67199.

It is an object of the present invention to be able to manufacture a rotating electric machine without complicated preforming of the winding and to connect the exterior of the winding conductor to an equalising potential in a simple manner.

Accordingly, from a first aspect, the present invention provides an insulated conductor for high-voltage windings according to claim 1 and comprising one or more strands, an inner, first semiconducting layer surrounding the strands, a first insulating layer surrounding the inner, first semi-conducting layer, an outer, second semi-conducting layer surrounding the first insulating layer, a continuous conductive means overlying a part only of the outer, second semi-conducting layer and a second insulating layer surrounding the second semi-conducting layer and the continuous conductive means.

Preferably, the first and second semi-conductive layers comprise a base polymer filled with carbon black or metallic particles. The volume resistivity of the first and second semi-conducting layers is preferably between 1 and 10⁵ Ω·cm.

The continuous conductive means preferably comprises at least one metallic strip or wire, for example of copper. The continuous conductive means may be wrapped helically around the second semi-conducting layer.

The purpose of the continuous conductive means is to facilitate connection of the second semi-conducting layer to an equalising potential, such as earth. For this reason the second insulating layer may be translucent to render the continuous conductive means visible.

Accordingly, from a second aspect, the invention provides a method of connecting the insulated conductor defined above to an equalising potential according to claim 8 and comprising the steps of removing a portion of the second insulating layer at at least one given location and connecting the conductive means to the equalising potential through the opening left by the removed portion. A part of the conductive means which is connected to the equalising potential may be isolated from an adjacent such part by forming a discontinuity in the conductive means. This can be achieved by forming a break in the second insulating layer between two said given locations and forming the discontinuity at said break.

In an embodiment of the invention, the openings and/or breaks in the second insulating layer and/or the discontinuities are formed by cutting with a blade. Once the discontinuities in the conductive means have been formed, one or both of the ends of the conductive means so formed can be extracted through the break in the second insulating layer and folded thereover. The connections to the equalising potential or earth can be made, for example, by soldering or by means of a resilient mechanical device. If a series of N connections to the equalising potential are made at N respective given locations, and N-1 discontinuities are made at N-1 breaks between each two given locations, then a series of N separately earthed sections of the discontinuous conductive means can be formed.

From a third aspect, the invention provides an electric machine comprising an insulated conductor as defined above and which conductor has been connected to an equalising potential by the method described above. Preferably, the conductor comprises at least the stator winding of the machine and preferably the winding is connected to the equalising potential in a plurality of locations outside or at the end of the stator.

In order that the invention may be more readily understood, embodiments thereof will now be described by way of example only with reference to the accompanying drawings, in which:-
Figure 1 is a cross section through an insulated conductor according to the invention;
Figure 2 is a side view of the conductor of Figure 1 after being prepared for connection to earth according to one embodiment of the invention;
Figure 3 is a side view as in Figure 2 but according to another embodiment of the invention; and
Figures 4 to 6 are side views showing alternative configurations of the initially continuous conductive means.

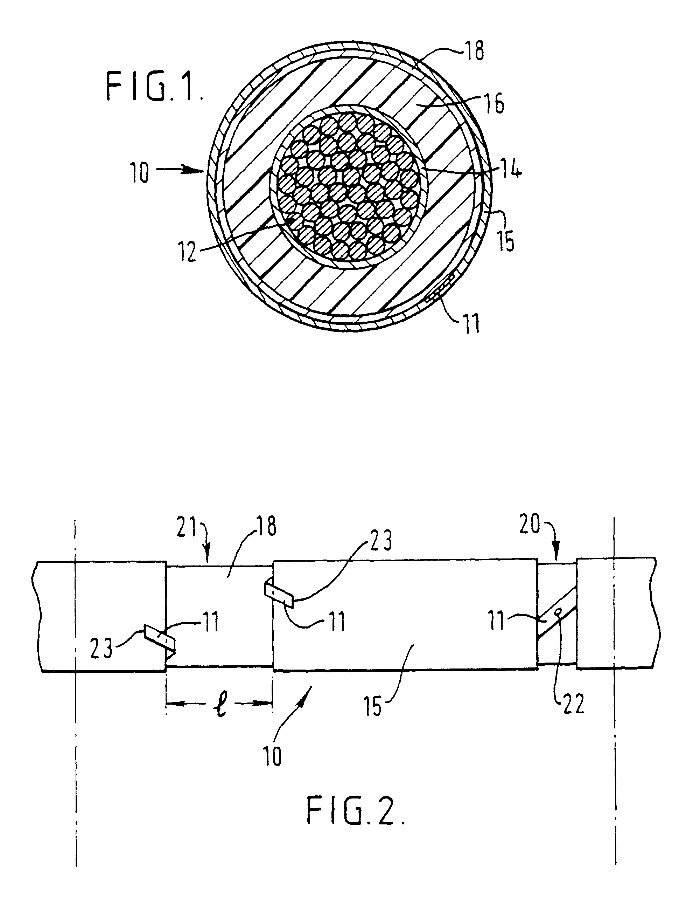

Referring to Figure 1, an insulated conductor 10 comprises a plurality of copper strands 12 surrounded by a first semi-conducting layer 14. The majority of the strands 12 are insulated but one or some of the strands adjacent to the first semi-conducting layer 14 are not insulated so as to maintain the latter at the same voltage as the strands.

A first insulating layer 16, preferably of crosslinked polyethylene (XLPE) but possibly of ethylene propylene rubber, poly butylene, poly methyl pentene, ethylene acrylate copolymer, ethylene ethyl acrylate copolymer or like material, surrounds the first semi-conducting layer 14. The first insulating layer 16 is surrounded by a second semi-conductive layer 18. The semi-conducting layers 14, 18 are made from a base polymer impregnated with carbon black, suitable base polymers including ethylene vinyl acetate copolymer/nitrile rubber, butyl grafted polythene, ethylene butyl acrylate copolymer, ethylene ethyl acrylate copolymer, ethylene propene rubber, polyethylenes of low density. By varying the amount of carbon black, the resistivity of the semi-conducting layers 14, 18 can be adjusted. Thus these two layers are made to have a resistivity of between 1 and 10⁵ Ω·cm, for example about 20 Ω·cm.

After the layers 14, 16, 18 have been extruded through a suitable die around the strands 12, a copper tape 11 is wrapped helically around the second semi-conducting layer 18. The copper tape 11 has a cross-sectional area of a few square millimetres and is in intimate contact with a small portion of the second semi-conducting layer 18 along the entire length of the conductor 10. Subsequently, an abrasion-resistant polymeric second insulating layer 15 is extruded around the conductor 10 including the copper tape 11. The second insulating layer may for example be of medium or high density polyethylene, polyamide or polyethylene terephthalate.

In the method of the invention, the conductor is prepared for connection to the equalising potential (usually earth) either before or after the conductor has been wound on to a machine. In the case of a rotating machine, the winding step comprises threading the conductor longitudinally through the slots of the stator or rotor. Such a winding method means that, in cross-section, the slots need not be rectangular but can approximate one or more circles for greater efficiency of the magnetic circuit.

The purpose of the copper strip is to connect the second semi-conducting layer to earth. To achieve this, as shown in Figure 2, openings 20 are formed at intervals along the conductor, by cutting off a portion comprising a ring of the outer insulating layer 15. An exposed contact portion 22 of the copper tape 11 is then connected to a grounding lead, for example by soldering or by means of a resilient mechanical device.

In order to divide the exterior of the conductor 10 into a series of separately earthed sections, breaks 21 having a length 1 of from 5 to 30 cm are formed in the second insulating layer 15, by cutting off the desired length of this layer. The exposed copper tape 11 is then severed at the mid-point of the break 21 and the two ends 23 of the copper tape so formed are separated by folding them back over the surface of the second insulating layer 15.

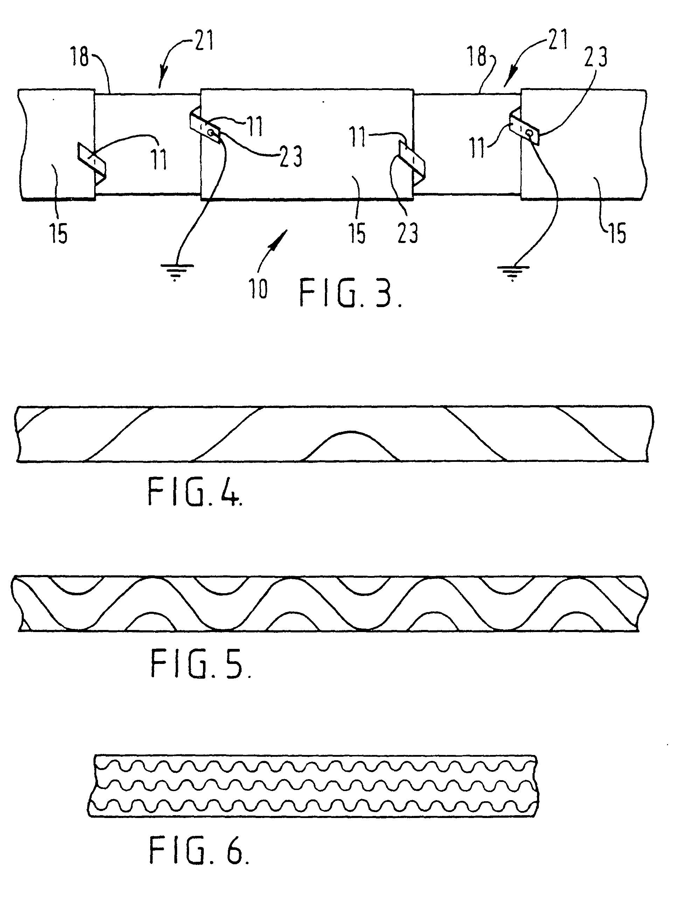

Figure 3 shows an alternative method of grounding the conductor 10 in sections. A plurality of breaks 21 are formed at intervals, and the cut ends 23 of the copper tape are folded apart as described above. At each break, that one of the two ends 23 closest to one end of the conductor (the right hand end in the Figure) is grounded by soldering or otherwise connecting to a suitable lead.

Alternative configurations for the initially continuous conductive means are possible other than the helical copper tape 11 which has been described. For example, two or more such copper tapes could be provided at equiangular spacings around the circumference of the conductor.

The conductive means could comprise at least one copper or aluminium wire. Figure 4 shows such a wire arranged in an "S-Z" configuration, that is, wound in alternate left-hand and right-hand directions. Figure 5 shows a plurality of wires arranged in a meandering configuration and Figure 6 shows a plurality of wrinkled wires.

The electrical insulation of an electrical conductor according to the invention is intended to be able to handle very high voltages, e.g. up to 800 kV or higher, and the consequent electric and thermal loads which may arise at these voltages. By way of example, electrical conductors according to the invention may comprise windings of machines having rated powers from a few hundred kVA up to more than 1000 MVA and with rated voltages from 3 - 4 kV up to very high transmission voltages of from 400 - 800 kV or more. At high operating voltages, partial discharges, or PD, constitute a serious problem for known insulation systems. If cavities or pores are present in the insulation, internal corona discharge may arise whereby the insulating material is gradually degraded eventually leading to breakdown of the insulation. The electric load on the electrical insulation in use of an electrical conductor according to the present invention is reduced by ensuring that the inner layer of semi-conductive material of the insulation system is at substantially the same electric potential as conductors of the central electrically conductive means which it surrounds and the semi-conductive outer layer is at a controlled, e.g. earth, potential. Thus, the electric field in the electrically insulating layer between these inner and outer layers is distributed substantially uniformly over the thickness of the intermediate layer. By having materials with similar thermal properties and with few defects in these layers of the insulation system, the possibility of PD is reduced at given operating voltages. The electrical conductor can thus be designed to withdraw very high operating voltages, typically up to 800 kV or higher.

## Claims

1. An insulated conductor comprising one or more strands (12), an inner, first semi-conducting layer (14) surrounding the strands, a first insulating layer (16) surrounding the inner, first semi-conducting layer (14), an outer, second semi-conducting layer (18) surrounding the first insulating layer (16), and a second insulating layer (15) surrounding the second semi-conducting layer (18), **characterised in that** a continuous conductive means (11) overlies a part only of the outer, second semi-conducting layer (18), **in that** the second insulating layer (15) also surrounds the continuous conductive means (11) and **in that** the insulated conductor is therefore suitable for high-voltage windings.

2. A conductor as claimed in claim 1, wherein the first (14) and second (18) semi-conducting layers comprise a base polymer filled with carbon black or metallic particles.

3. A conductor as claimed in claim 1 or 2, wherein the resistivity of the second semi-conducting layer (18) is between 1 and 10⁵ Ω·cm.

4. A conductor as claimed in claim 1, 2 or 3, wherein the conductive means (11) comprises at least one metallic strip or wire.

5. A conductor as claimed in claim 4, wherein said at least one strip or wire (11) is wrapped helically around the conductor.

6. A conductor according to any one of the preceding claims, **characterised in that** the insulating (15, 16) and semi-conductive (14, 18) layers are designed for high voltage, suitably in excess of 10 kV, in particular in excess of 36 kV, and preferably more than 72.5 kV up to very high transmission voltages, such as 400 kV to 800 kV or higher.

7. A conductor according to any one of the preceding claims, **characterised in that** the insulating (15, 16) and semi-conductive (14, 18) layers are designed for a power range in excess of 0.5 MVA, preferably in excess of 30 MVA and up to 1000 MVA.

8. A method of connecting the conductive means of a conductor as claimed in any preceding claim to an equalising potential, comprising the steps of removing a portion of the second insulating layer (15) at at least one given location and connecting the conductive means (11) to the equalising potential through the opening (20; 21) left by the removed portion.

9. A method as claimed in claim 8, wherein a part of the conductive means (11) which is connected to the equalising potential is isolated from an adjacent such part by forming a discontinuity in the conductive means.

10. A method as claimed in claim 9, wherein a discontinuity is formed at the opening (20; 21) at the or each given location.

11. A method as claimed in claim 9, wherein a break (21) is formed in the second insulating layer between two said given locations and the discontinuity is formed at said break.

12. A method as claimed in claim 10 or 11, wherein, once the discontinuity has been formed, one or both of the ends (23) of the conductive means (11) so formed is/are extracted through the break (21) or opening (20) in the second insulating layer and folded over the second insulating layer.

13. A method as claimed in claim 9, 10, 11 or 12, comprising forming a series of separately earthed sections of the conductive means (11).

14. An electric machine comprising a winding formed from a conductor as claimed in any one of claims 1 to 7.

15. An electric machine as claimed in claim 14 which is a large generator.

## Patentansprüche

1. Isolierter Leiter mit einem oder mehreren Einzelleitern (12), einer die Einzelleiter umgebenden inneren ersten halbleitenden Schicht (14), einer die innere erste halbleitende Schicht (14) umgebenden ersten Isolierschicht (16), einer äußeren die erste Isolierschicht (16) umgebenden zweiten halbleitenden Schicht (18) und einer die zweite halbleitende Schicht (18) umgebenden zweiten Isolierschicht (15), **dadurch gekennzeichnet, daß** einem Teil nur der äußeren zweiten halbleitenden Schicht (18) ein kontinuierliches leitfähiges Mittel (11) überlagert ist, daß die zweite Isolierschicht (15) ebenfalls das kontinuierliche leitfähige Mittel (11) umgibt und daß der isolierte Leiter daher für Hochspannungswicklungen geeignet ist.

2. Leiter nach Anspruch 1, wobei die erste (14) und zweite (18) halbleitende Schicht ein mit Ruß- oder Metallteilchen angefülltes Baispolymer umfassen.

3. Leiter nach Anspruch 1 oder 2, wobei der spezifische Widerstand der zweiten halbleitenden Schicht (18) zwischen 1 und 10⁵ Ω·cm beträgt.

4. Leiter nach Anspruch 1, 2 oder 3, wobei das leitfähige Mittel (11) mindestens einen Metallstreifen oder -draht umfaßt.

5. Leiter nach Anspruch 4, wobei der mindestens eine Streifen oder Draht (11) schraubenförmig um den Leiter gewickelt ist.

6. Leiter nach einem der vorhergehenden Ansprüche, **dadurch gekennzeichnet, daß** die Isolierschichten (15, 16) und halbleitenden Schichten (14, 18) für Hochspannung, geeigneterweise 10 kV überschreitend, insbesondere 36 kV überschreitend und vorzugsweise mehr als 72,5 kV bis zu sehr hohen Übertragungsspannungen wie 400 kV bis 800 kV oder höher ausgelegt sind.

7. Leiter nach einem der vorhergehenden Ansprüche, **dadurch gekennzeichnet, daß** die Isolierschichten (15, 16) und halbleitenden Schichten (14, 18) für einen Leistungsbereich, 0,5 MVA überschreitend, vorzugsweise 30 MVA überschreitend und bis zu 1000 MVA ausgelegt sind.

8. Verfahren zum Verbinden des leitfähigen Mittels eines Leiters nach einem der vorhergehenden Ansprüche mit einem Ausgleichspotential mit den Schritten des Entfernens eines Teils der zweiten Isolierschicht (15) an mindestens einer gegebenen Stelle und Verbindens des leitfähigen Mittels (11) mit dem Ausgleichspotential durch die vom entfernten Teil gelassene Öffnung (20; 21).

9. Verfahren nach Anspruch 8, wobei ein Teil des leitfähigen Mittels (11), das mit dem Ausgleichspotential verbunden ist, von einem benachbarten derartigen Teil durch Bilden einer Unterbrechung in dem leitfähigen Mittel isoliert ist.

10. Verfahren nach Anspruch 9, wobei eine Unterbrechung an der Öffnung (20; 21) an der oder jeder gegebenen Stelle gebildet wird.

11. Verfahren nach Anspruch 9, wobei eine Trennstelle (21) in der zweiten Isolierschicht zwischen zwei gegebenen Stellen gebildet wird und die Unterbrechung an der Trennstelle gebildet wird.

12. Verfahren nach Anspruch 10 oder 11, wobei nach Bildung der Unterbrechung eines oder beide der dadurch gebildeten Enden (23) des leitfähigen Mittels (11) durch die Trennstelle (21) oder Öffnung (20) in der zweiten Isolierschicht herausgezogen und über die zweite Isolierschicht gefaltet wird/werden.

13. Verfahren nach Anspruch 9, 10, 11 oder 12 mit dem Bilden einer Reihe von getrennt geerdeten Abschnitten des leitfähigen Mittels (11).

14. Elektrische Maschine mit einer aus einem Leiter nach einem beliebigen der Ansprüche 1 bis 7 gebildeten Wicklung.

15. Elektrische Maschine nach Anspruch 14, die ein großer Generator ist.

## Revendications

1. Conducteur isolé comprenant un ou plusieurs brins (12), une première couche semiconductrice intérieure (14) entourant les brins, une première couche isolante (16) entourant la première couche semiconductrice intérieure (14), une deuxième couche semiconductrice extérieure (18) entourant la première couche isolante (16), et une deuxième couche isolante (15) entourant la deuxième couche semiconductrice (18), **caractérisé en ce qu'**un moyen conducteur continu (11) recouvre une partie seulement de la deuxième couche semiconductrice extérieure (18), **en ce que** la deuxième couche isolante (15) entoure également le moyen conducteur continu (11) et **en ce que** le conducteur isolé convient donc à des enroulements haute tension.

2. Conducteur selon la revendication 1, dans lequel les première (14) et deuxième (18) couches semiconductrices comprennent un polymère de base chargé de noir de fumée ou de particules métalliques.

3. Conducteur selon la revendication 1 ou 2, dans lequel la résistivité de la deuxième couche semiconductrice (18) est comprise entre 1 et 10⁵ Ω.cm.

4. Conducteur selon la revendication 1, 2 ou 3, dans lequel le moyen conducteur (11) comprend au moins un ruban ou un fil métallique.

5. Conducteur selon la revendication 4, dans lequel ledit au moins un ruban ou fil (11) est enroulé en hélice autour du conducteur.

6. Conducteur selon l'une quelconque des revendications précédentes, **caractérisé en ce que** les couches isolantes (15, 16) et semiconductrices (14, 18) sont conçues pour une tension élevée, excédant de façon adéquate 10 kV et en particulier 36 kV, et de préférence de plus de 72,5 kV, jusqu'à de très hautes tensions de transmission, comme 400 kV à 800 kV, voire davantage.

7. Conducteur selon l'une quelconque des revendications précédentes, **caractérisé en ce que** les couches isolantes (15, 16) et semiconductrices (14, 18) sont conçues pour une plage de puissance excédant 0,5 MVA, de préférence 30 MVA et allant jusqu'à 1000 MVA.

8. Procédé de raccordement du moyen conducteur d'un conducteur selon l'une quelconque des revendications précédentes à un potentiel d'égalisation, comprenant les étapes consistant à retirer une portion de la deuxième couche isolante (15) au niveau d'au moins un endroit donné et à raccorder le moyen conducteur (11) au potentiel d'égalisation par l'ouverture (20 ; 21) laissée par la portion retirée.

9. Procédé selon la revendication 8, dans lequel une partie du moyen conducteur (11) qui est raccordé au potentiel d'égalisation est isolée d'une partie adjacente de ce type en formant une discontinuité dans le moyen conducteur.

10. Procédé selon la revendication 9, dans lequel une discontinuité est formée au niveau de l'ouverture (20 ; 21) au niveau de l'endroit donné ou de chaque endroit donné.

11. Procédé selon la revendication 9, dans lequel une coupure (21) est formée dans la deuxième couche isolante entre deux dits endroits donnés et la discontinuité est formée au niveau de ladite coupure.

12. Procédé selon la revendication 10 ou 11, dans lequel, une fois la discontinuité formée, une des extrémités (23), ou les deux, du moyen conducteur (11) ainsi formée(s) est/sont extraite(s) par la coupure (21) ou l'ouverture (20) dans la deuxième couche isolante et repliée(s) sur la deuxième couche isolante.

13. Procédé selon la revendication 9, 10, 11 ou 12, comprenant la formation d'une série de sections du moyen conducteur (11) raccordées séparément à la terre.

14. Machine électrique comprenant un enroulement formé à partir d'un conducteur selon l'une quelconque des revendications 1 à 7.

15. Machine électrique selon la revendication 14 constituant une grosse génératrice.
